**Europäisches Patentamt**

(19) **European Patent Office**

**Office européen des brevets**

(11) Numéro de publication: **0 149 379**
**B1**

(12) # FASCICULE DE BREVET EUROPEEN

(45) Date de publication du fascicule du brevet:
**09.12.87**

(51) Int. Cl.⁴: **F 16 F 9/42,** B 62 D 55/10

(21) Numéro de dépôt: **84402505.6**

(22) Date de dépôt: **05.12.84**

(54) **Elément de suspension hydropneumatique de véhicule, notamment suspension oléopneumatique destinée à équiper des véhicules lourds, et suspension constituée de tels éléments.**

(30) Priorité: **14.12.83 FR 8320063**

(43) Date de publication de la demande:
**24.07.85 Bulletin 85/30**

(45) Mention de la délivrance du brevet:
**09.12.87 Bulletin 87/50**

(84) Etats contractants désignés:
**CH DE GB IT LI**

(56) Documents cités:
**EP - A - 0 045 269**
**US - A - 3 602 470**
**US - A - 4 061 320**
**US - A - 4 156 536**

(73) Titulaire: **S.A.M.M.- Société d'Applications des Machines Motrices, 224, Quai de Stalingrad, F-92130 Issy-les-Moulineaux (FR)**

(72) Inventeur: **Bouiges, Thierry, 12 Rue Galilée, F-75116 Paris (FR)**
Inventeur: **Arnaud, alain, 20 Rue du Loup pendu, F-9290 Chatenay Malabry (FR)**

(74) Mandataire: **Polus, Camille et al, c/o Cabinet Lavoix 2, Place d'Estienne d'Orves, F-75441 Paris Cedex 09 (FR)**

## Description

La présente invention a pour objet un élément de suspension hydropneumatique de véhicule, notamment oléopneumatique destiné à équiper des véhicules lourds, tels que des véhicules blindés.

On sait qu'un élément de suspension oléopneumatique comprend un piston mobile dans un cylindre, un accumulateur à gaz solidaire du cylindre et contenant du gaz ainsi qu'un liquide séparé du gaz par une membrane souple, et une cartouche amortisseur placée dans le liquide entre le piston et la membrane.

L'amortissement est obtenu de façon élégante et commode en obligeant l'huile à traverser des diffuseurs de la cartouche, créant ainsi, lors des déplacements du piston dans un sens ou dans l'autre, une perte de charge d'autant plus élevée que la vitesse est grande.

Cette dissipation a deux conséquences:

a) elle chauffe l'huile, limitant ainsi l'utilisation de l'élément de suspension à une température maximale imposée par des organes mécaniques (joints, membranes) sensibles à ces températures. En pratique, cette température limite de l'huile est de 140°C environ;

b) elle réchauffe les gaz de l'accumulateur (azote), augmentant ainsi la pression moyenne de fonctionnement de l'élément. Il en résulte par réaction une variation (augmentation) de la hauteur du châssis du véhicule au-dessus du sol, c'est-à-dire de sa garde au sol. Une telle variation de la garde au sol peut également être provoquée, quoique à une échelle moindre, par des variations importantes de la température atmosphérique.

Il importe donc de limiter la température de l'huile, ce qui permet corrélativement de maintenir sensiblement constante au-dessus du sol la hauteur du châssis du véhicule. Pour ce faire, on a proposé un dispositif de refroidissement de toute la suspension constitué d'une de ces éléments, en refroidissant l'huile de ces derniers. On s'efforce d'ailleurs en général de refroidir simultanément l'huile de tous les éléments constituant la suspension. Mais un tel dispositif nécessite une installation spécifique de refroidissement, comportant une pompe et un radiateur, qui est coûteuse et peu fiable. On a également mis en oeuvre des systèmes d'injection d'huile au moyen d'une centrale hydraulique. Cette centrale est onéreuse, et manque de fiabilité. En effet, en cas de fuites ou de rupture de la canalisation d'injection d'huile, la suspension est hors d'usage. De plus, il est en pratique relativement difficile d'injecter de l'huile dans un élément de suspension oléopneumatique durant le fonctionnement de cet élément.

L'invention a pour but d'éliminer ces inconvénients en proposant une solution simple, fiable et beaucoup moins onéreuse que les dispositifs rappelés ci-dessus.

Suivant l'invention, les moyens pour refroidir le liquide de l'élément de suspension comprennent un caloduc reliant la cartouche amortisseur qui forme une source chaude, à une source froide constituée par le châssis du véhicule ou par une surface libre de l'élément lui-même, le caloduc contenant un gaz pouvant s'évaporer au contact de la cartouche, puis se déplacer jusqu'à la source froide où il se condense, et retourner ensuite à la cartouche formant évaporateur en répétant le cycle, la source froide étant située au-dessus de la source chaude constituée par la cartouche amortisseur.

Ainsi, le caloduc est intégré à l'élément de suspension de telle sorte qu'il est capable de ramener la température de l'amortisseur à un potentiel thermique quasi constant, matérialisé par le châssis du véhicule ou par une surface libre de l'élément de suspension. La température du châssis étant relativement uniforme, chaque élément de suspension est ainsi contraint de fonctionner à une température qui ne dépend pratiquement que des conditions climatiques ou saisonnières.

Le caloduc constitue un drain thermique à fort débit qui limite la température de fonctionnement de l'huile, et de ce fait maintient sensiblement constante la garde au sol du véhicule.

Ces avantages sont particulièrement appréciables lorsque la suspension est appelée à fonctionner dans des conditions sévères, notamment sur terrains accidentées comme cela peut être le cas pour des véhicules blindés.

Suivant un mode de réalisation de l'invention, le caloduc est constitué d'un conduit fermé s'étendant de l'intérieur de la cartouche amortisseur jusqu'à une surface libre d'un corps fixe au cylindre et traversé par un bras support de roue, ce conduit étant agencé dans la paroi du cylindre et dans le corps, et des moyens sont prévus pour assurer l'étanchéité du conduit au passage de la paroi du cylindre dans le corps.

On peut en effet utiliser les surfaces libres et relativement plus froides de l'élément de suspension lui-même, au lieu de réaliser une connexion avec le châssis. Cela permet déjà d'abaisser sensiblement la température de l'amortisseur.

L'invention a également pour but de réaliser un dispositif permettant de faire varier la garde au sol du véhicule, ce qui est en effet avantageux dans certaines conditions d'utilisation des véhicules lourds, par exemple sur des terrains boueux ou sableux dans lesquels le véhicule risque de s'enliser.

A cet effet, conformément à l'invention, le caloduc débouche, au-delà de son extrémité située dans la source froide, dans une enceinte contenant un gaz incondensable dans le domaine de températures considérées pour l'élément de suspension et sa cartouche amortisseur, ainsi qu'une source de caleur telle qu'une résistance chauffante, dont le réglage permet de déplacer un front entre les deux gaz, et par conséquent la température du liquide de l'élément et la garde au sol du véhicule.

On comprend en effet que le réglage de la source de chaleur placée dans l'enceintre permet de déplacer le front entre les deux gaz, et par conséquent d'augmenter ou de diminuer la température de l'huile dans l'élément, selon que ce front séloigne ou au contraire se rapproche de l'enceinte de telle sorte que la surface effectivement offerte par la source pour l'évacuation des calories diminue ou au contraire s'accroît.

D'autres particularités et avantages de l'invention apparaîtront au cours de la description qui va suivre, faite en référence aux dessins annexés qui en illustrent à titre d'exemples non limitatifs, plusieurs modes de réalisation:

la figure 1 est une vue en coupe longitudinale d'un élément de suspension hydropneumatique équipé d'un caloduc schématiquement représenté;

la figure 2 est une vue en coupe axiale d'un second élément de suspension hydropneumatique muni d'un caloduc schématiquement représenté;

la figure 3 est une vue en coupe axiale d'un mode de réalisation industrielle d'un élément de suspension muni d'un caloduc d'évacuation de la chaleur dissipée par l'huile en cours de fonctionnement;

la figure 4 est une vue mi-coupe axiale, mi-élévation d'un second mode de réalisation industrielle de l'invention, montrant deux éléments de suspension hydropneumatique équipés chacun d'un caloduc aboutissant au châssis du véhicule;

la figure 5 est une vue en coupe transversale suivant V-V de la figure 4;

la figure 6 est un schéma illustrant le principe de la combinaison, dans un élément de suspension hydropneumatique, d'un caloduc et d'une enceinte contenant une source de chaleur réglable, pour régler la hauteur du châssis du véhicule au-dessus du sol;

la figure 7 est une vue en coupe axiale d'un troisième mode de réalisation industrielle de l'invention, mettant en oeuvre le principe illustré à la figure 6.

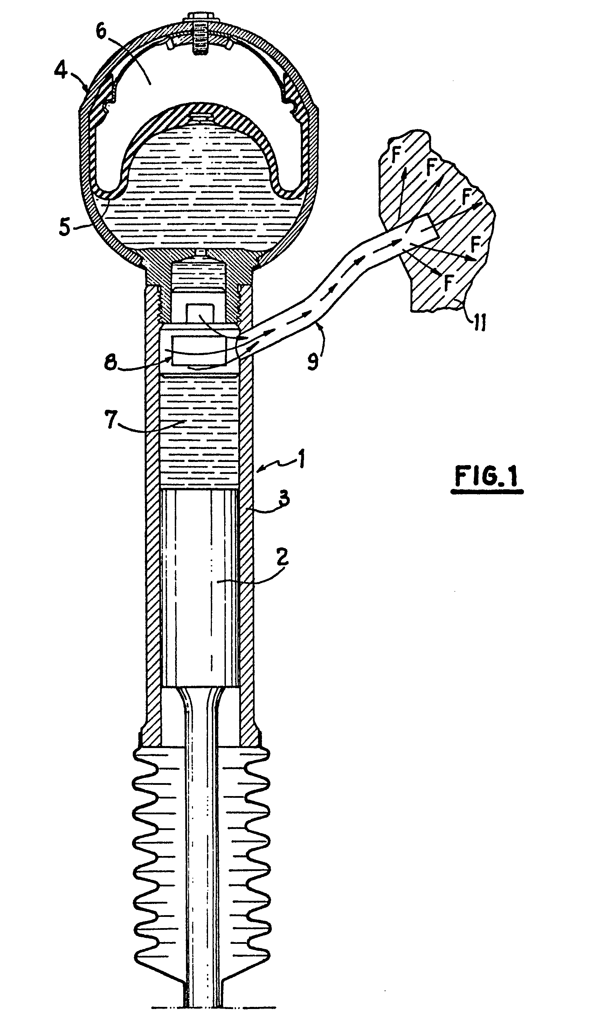

En se reportant à la figure 1, on voit un élément 1 de suspension oléopneumatique comportant classiquement un piston 2 mobile dans un cylindre 3, un accumulateur à gaz 4 muni intérieurement d'une membrane souple 5 de séparation entre un volume 6 de gaz et de l'huile 7 remplissant l'espace compris entre le piston 2 et la membrane 5, ainsi qu'une cartouche amortisseur 8 placée dans le liquide 7 entre le piston 2 et la membrane 5. Ces organes sont connus en soi et ne seront donc pas davantage décrits.

L'élément 1 est également muni de moyens pour refroidir l'huile 7 et corrélativement pour régler la garde au sol du châssis du véhicule.

Suivant l'invention, ces moyens comprennent un caloduc 9 schématiquement représenté, reliant la cartouche amortisseur 8 qui forme une source chaude, à une source froide 11 qui peut être le châssis du véhicule ou une surface libre de l'élément 1 lui-même. Le caloduc 9 est un conduit contenant un gaz pouvant s'évaporer au contact de la cartouche 8, puis se déplacer comme indiqué par des flèches jusqu'à l'extrémité opposée du conduit, dans la source froide 11 où les calories transportées par le gaz sont dissipées (flèches F), le gaz se condensant en fines gouttelettes à cette extrémité du caloduc 9. La source froide 11 étant située au-dessus de la source chaude constituée par la cartouche 8 formant évaporateur, les gouttelettes de gaz condensé redescendent progressivement le long de la paroi du caloduc 9, puis s'évaporent de nouveau dans la cartouche 8, après quoi le cycle précédent recommence, et ce durant tout le fonctionnement de l'élément de suspension 1, c'est-à-dire durant les déplacements du véhicule incorporant une série de ces éléments.

En effet, pendant les déplacements du piston 2 provoqués par les irrégularités du terrain ou par les défauts de roulage, l'huile sous pression 7 est refoulée dans l'accumulateur 4 où elle comprime ou détend le gaz 6. Durant ces déplacements, l'huile traverse la cartouche 8 où elle dissipe de l'énergie sous forme calorifique. Grâce à la présence du caloduc 9 qui prend naissance à l'intérieur même de l'amortisseur 8, l'énergie calorifique qui échauffe progressivement l'huile est principalement évacuée par le caloduc 9 vers la source froide 11.

Si cette source froide 11 est le châssis du véhicule, dont la température varie peu d'un point à l'autre, les différents éléments de suspension 1 évacuent leur chaleur vers des sources froides qui sont sensiblement à la même température, celles-ci étant la température moyenne du châssis. Ceci présente l'avantage de limiter les dissymétries dues aux écarts de températures à l'arrêt.

Ainsi, on comprend que la mise en oeuvre d'un caloduc 9 associé à chaque élément de suspension 1 limite la température de l'huile (en pratique à environ 140°C), donc préserve le maintien en bon état des organes mécaniques de l'élément, et de plus maintient pratiquement constante la heuteur du châssis au-dessus du sol, quels que soient les accidents du terrain.

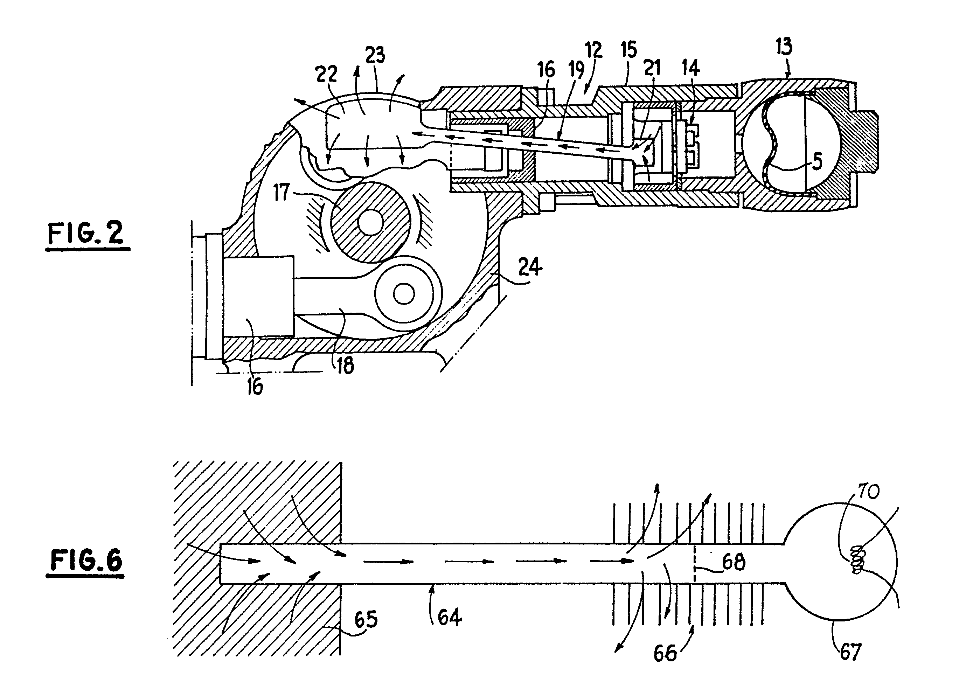

On a représenté à la figure 2 un élément de suspension 12 comportant un accumulateur à gaz 13, une cartouche amortisseur 14, un cylindre 15, un piston 16 coopérant de manière connue en soi avec un bras 17 support de roue (cette dernière n'étant pas représentée), ce bras 17 étant également associé à un autre piston 16 d'un second élément de suspension identique à l'élément 12.

Chaque piston 16 porte une tige 18 coopérant de façon connue avec le bras 17.

Chaque élément tel que 12 est muni d'un caloduc 19 schématiquement représenté, constitué par un conduit prenant naissance dans une chambre 21 intérieure à l'amortisseur 14 et qui aboutit dans un compartiment fermé 22, contigu à la surface libre 23 d'un corps 24 coaxial au bras 17 et auquel sont fixés les cylindres 15.

Le fonctionnement du caloduc 19 est le même que celui décrit en référence à la figure 1, avec cette particularité que la source froide est ici constituée par la surface libre 23 du corps 24 de l'élément de suspension 12 lui-même.

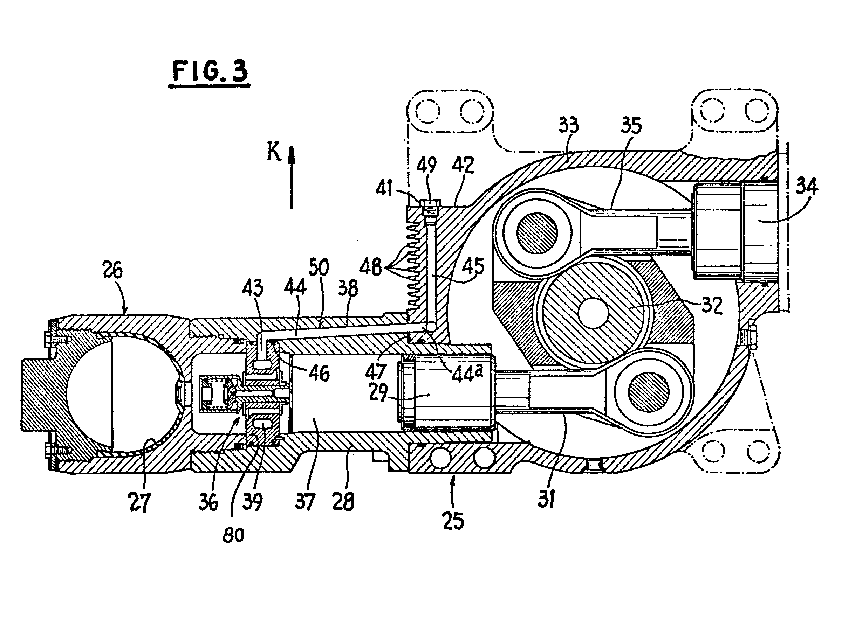

En cas de fonctionnement intensif de la suspension, l'ensemble de chaque élément 12 atteint rapidement la température limite. La figure 3 illustre un mode de réalisation industrielle d'un élément de suspension 25 comportant de façon connue, comme dans les cas précédents, un accumulateur de gaz 26 à membrane souple 27, un cylindre 28 contenant un piston coulissant 29 prolongé par une tige 31 qui coopère avec un bras 32 support de roue logé dans un carter 33 coaxial à ce bras, qui est également associé à un second piston 34 identique au piston 29 et similairement pourvu d'une tige 35.

Le bras 32 coopère donc avec deux éléments de suspension 25 identiques, ayant un corps commun 33 fixé à leurs cylindres respectifs 28, chaque élément 25 étant équipé d'une cartouche amortisseur 36 traversée par l'huile 37 alternativement dans chaque sens durant les déplacements des pistons 29, 34.

Conformément à l'invention, chaque élément 25 est pourvu d'un caloduc 38 constitué d'un conduit fermé, dont une extrémité est formée par une chambre 39 agencée à l'intérieur de la cartouche 36 coaxialement à celle-ci, et dont l'extrémité opposée 41 est contiguë à une surface libre 42 du carter 33. Entre ces deux extrémités 39, 41, le conduit 38 comporte une première section 43 formée radialement dans la cartouche 36, et qui débouche dans la paroi du cylindre 28, une seconde section 44 pratiquée dans la paroi du cylindre 28, et qui débouche en 44a dans le cater 33, et enfin une troisième section 45 qui s'étend radialement dans le carter 33 jusqu'à l'extrémité 41.

Les cartouches 36 comprennent chacune une pièce cylindrique 80 dans laquelle est formée la section 43 du caloduc 38. Les pièces 80, ainsi que les pistons 29, sont réalisés en un matériau à bonne conduction thermique et à bonne capacité thermique, tel que le cuivre ou un alliage cuivreux (bronze).

Des joints toriques 46 et 47 assurent l'étanchéité respectivement entre l'amortisseur 36 et le cylindre 28, et entre ce dernier et le carter 33, au droit du conduit 38 contenant un gaz condensable approprié au domaine de température considéré, et dont l'étanchéité est ainsi garantie.

Des ailettes 48 sont ménagées sur la surface du carter 33 au droit de la section 45, afin de faciliter l'évacuation de la chaleur vers l'extérieur, l'extrémité 41 étant obturée par une vis 49.

Lorsque consécutivement aux oscillations du piston 29 durant le roulage du véhicule, l'huile exécute des va-et-vient à travers la cartouche amortisseur 36, et que par conséquent la température de l'huile s'élève, la chaleur correspondante est essentiellement recueillie dans la chambre 39 où le gaz condensé (par exemple un fréon) s'évapore. Le haut de l'élément 25 étant indiqué par la flèche K, c'est-à-dire que l'extrémité 41 est située à un niveau au-dessus du sol supérieur à la chambre 39, le gaz remonte par les sections 43, 44 et 45 jusqu'à l'extrémité 41 constituant une source froide ou il se condense en fines gouttelettes, tandis que les calories transportées par le gaz sont évacuées progressivement à partir de la section 45 et par l'extrémité 41 à travers le carter 33 et sa surface libre 42. Les gouttelettes de gaz condensé formées dans le condenseur 41 redescendent ensuite progressivement vers la chambre 39 formant évaporateur, par les sections 45, 44 et 43, où elles s'évaporent de nouveau, de sorte que le cycle précédent recommence.

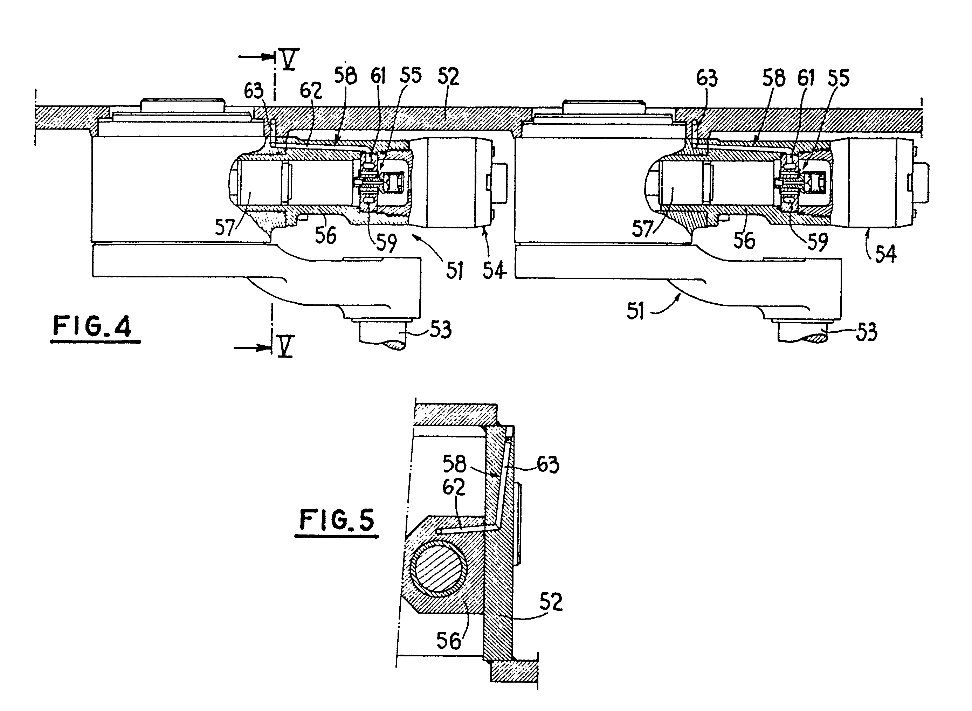

Dans le mode de réalisation industielle de la suspension représentée à la figure 4, on voit deux éléments 51 de cette suspension, logés entre le châssis 52 du véhicule et les fusées correspondantes 53 de roue. Chaque élément 51 comprend un accumulateur à gaz 54, une cartouche amortisseur 55, un cylindre 56 contenat un piston 57, et un caloduc 58 reliant une chambre 59 formée dans la cartouche 55 coaxialement à celle-ci, à une source froide constituée par le châssis 52.

Chaque caloduc 59 comprend ainsi, entre la chambre terminale 59, une première section 61 dans la cartouche 55, une seconde section 62 dans la paroi du cylindre 56, et une troisième section 63 agencée dans le châssis 52 et qui constitue la source froide ou condenseur.

Les sections 61, 63 sont formées radialement à l'axe général des éléments 51, tandis que les sections 59 s'étendent à peu près parallèlement à cet axe, de telle sorte que, le véhicule étant supposé sur un plan horizontal, les sections 63 sont situées à une hauteur au-dessus su sol supérieure à celle des sections 61.

Le fonctionnement des caloducs 59 est le même que celui des réalisations précédentes, avec par rapport à celles des figures 2 et 3, la particularité suivant laquelle la source froide est constituée par le châssis 52 du véhicule, et non par une surface libre du corps de l'élément de suspension.

Ainsi, les sources froides ou condenseurs 63 sont reliés au châssis 52 dont le potentiel thermique est sensiblement constant. Chaque élément de suspension 51, bien qu'isolé ou indépendant, conserve ainsi une garde au sol constante et identique à celle des autres éléments.

Lorsque le véhicule est un engin lourd, par exemple de masse supérieure à 20 tonnes, l'inertie thermique est grande, et la constante de temps relativement élevée des caloducs 58, ou 19 ou 39-41 (figure 3) filtre les instabilités de courtes durées.

Dans les différents modes de réalisation décrits ci-dessus, la présence des caloducs permet de contrôler thermiquement l'huile de la suspension en limitant sa température à la valeur maximale admissibler pour les organes mécaniques de la suspension, et ce avec une grande fiabilité: en effet, ce dispositif de contrôle est dépourvu de pièces mobiles, et du fait que chaque circuit thermique de caloduc associé à un élément est indépendant des autres circuits et autres éléments, une éventuelle défaillance d'un circuit n'a pas d'incidence sur le fonctionnement des circuits voisins, de sorte qu'il n'y pas propagation de ladite défaillance.

Enfin, ces dispositifs à caloducs sont peu onéreux comparativement aux dispositifs antérieurs connus, en raison de leur simplicité.

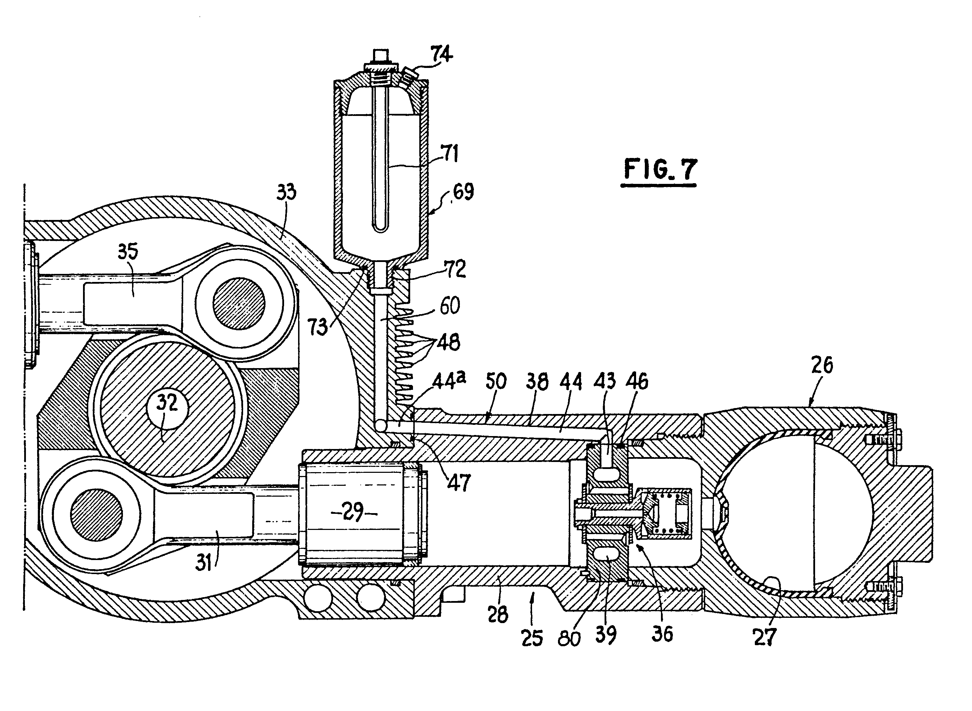

On a représenté à la figure 6 le principe de la mise en oeuvre d'un caloduc 64 reliant un évaporateur 65 (source chaude) d'un élément de suspension à une source froide (condenseur 66) avec une enceinte 67 contenant un gaz incondensable dans le domaine de températures considérées pour l'élément de suspension et son évaporateur 65, une source de chaleur telle qu'une résistance chauffante 70 étant placée dans l'enceinte 67.

Le volume de l'enceinte 67 est important par rapport à celui du caloduc 64, par exemple un litre environ pour un caloduc 64 ayant une contenance de 100 cm$^3$. Le caloduc 64 et l'enceinte 67 sont remplis d'un mélange de deux gaz, l'un condensable, l'autre incondensable dans le domaine de températures visées. Ainsi le fluide condensable peut être par exemple un alcool, une huile, un fréon, ou de l'eau, fluides qui peuvent coexister à l'état liquide et à l'état gazeux dans la plage de température de l'élément. La température de l'élément de suspension est normalement comprise entre −40°C et +60°C, qui sont les températures atmosphériques extrêmes dans lesquelles le véhicule peut être utilisé, la température de l'amortisseur ou évaporateur étant comprise entre 60 et 140°C et normalement d'environ 90°C.

Dans ces conditions, on peut utiliser par exemple l'azote comme gaz incondensable, dans l'enceinte 67, ce gaz se liquéfiant en effet à –195°C.

Le fonctionnement du dispositif schématiquement représenté à la figure 6 est alors le suivant.

Au repos, les deux gaz sont mélangés et des gouttelettes du gaz condensable se déposent au voisinage des pointe les plus froids, c'est-à-dire sur la paroi du caloduc traversant la source froide 66. Si l'évaporateur 65, le caloduc 64 et l'enceinte 67 sont à des températures égales, cette répartition est quasi uniforme, et le gaz incondensable remplit la presque totalité du volume du caloduc 64 et de l'enceinte 67.

En fonctionnement normal de l'élément de suspension comportant l'évaporateur 65, l'absorption de calories à la source chaude 65 évapore le gaz condensable qui se déplace vers la source froide 66 en suivant le trajet symbolisé par les flèches. Le gaz condensable est liquéfié sur la paroi intérieure à la source froide 66 dans laquelle les calories sont évacuées, puis ramené vers la source chaude 65 par capillarité, gravité, etc. Très rapidement le gaz incondensable est évacué du caloduc 64 et refoulé dans l'enceinte 67, de sorte qu'un «front» 68 est formé entre le gaz condensable et le gaz incondensable, ce «front» étant normalement situé entre les extrémités de la source froide 66 et très «raide», c'est-à-dire qu'en fonctionnement normal, il peut se déplacer sur un ou deux millimètres.

Si on fait alors varier la température dans l'enceinte 67 au moyen de la résistance chauffante 70, (qui peut être alimentée par exemple par une batterie du véhicule), on déplace le «front» 68 le long du caloduc 64. Si l'on élève la température dans l'enceinte 67, le front 68 se déplace en direction de l'évaporateur 65, de sorte que la surface de refroidissement offerte dans la source froide 66 au gaz condensable, diminue. De ce fait, la quantité de calories évacuée de l'évaporateur 65 décroît, et par conséquent, la température de la cartouche amortisseur formant l'évaporateur 65 augmente, ainsi que celle de l'huile. Il en résulte que la garde au sol du châssis du véhicule augmente.

Inversement, si on abaisse la température dans l'enceinte 67 en diminuant le chauffage par la résistance 70, le front 68 se déplace vers l'enceinte 67, la surface de retroidissement et d'évacuation des calories dans la source froide 66 offerte au gaz condensable augmente, et la température de l'évaporateur 65 ainsi que de l'huile de l'élément de suspension diminue. Il en résulte une diminution de la garde au sol du véhicule.

Ainsi, un tel dispositif permet de régler la hauteur au-dessus su sol du châssis du véhicule, uniquement en réglant le chauffage dans l'enceinte 67 par la résistance 70. Bien entendu, ce dispositif n'est actif que lorsque le véhicule se déplace et qu'il y a alors dissipation d'énergie.

Un tel dispositif de commande de la garde au sol présente un intérêt certain dans des circonstances particulières d'utilisation de véhicules lourds, par exemple sur des terrains boueux ou sableux. En effet, l'augmentation de la garde au sol du véhicule peut alors lui éviter d'être «aspiré» par la boue dans laquelle il s'enfonce, ou de rester enlisé dans le sable.

On a représenté à la figure 7, un mode de mise en oeuvre industrielle du dispositif de commande de la garde au sol d'un véhicule dont le principe est schématisé à la figure 6.

L'élément 25 de suspension est ici identique à celui de la figure 3. La section 60 du caloduc 50 communique avec un réservoir ou enceinte 69 dont la contenance est nettement supérieure à celle du caloduc 50 et qui est intérieurement munie d'une résistance chauffante 71. Cette enceinte ou ampoule 69 contient un gaz incondensable dans la domaine de température visé, et est munie d'un embout 72 enfoncé de manière étanche dans le corps 33 pour être raccordé avec la section 45 du caloduc 50. L'étanchéité entre l'enceinte 69 et le corps 33 est assurée par un joint torique 73.

Un bouchon 74 placé à la partie supérieure de l'enceinte 69 permet le remplissage de celle-ci par le gaz incondensable.

Chaque élément de la suspension du véhicule peut ainsi être équipé d'une enceinte 69 alimentée en électricité par une source convenable telle que la batterie du véhicule.

Le fonctionnement de ce dispositif de commande de la garde au sol du véhicule est le même que celui qui a été exposé en référence à la figure 6.

En variante, dans les différents modes de réalisation décrits, un tube contenant le gaz condensateur peut être logé dans le conduit constituant le caloduc.

Le caloduc prévu par l'invention ne commence à extraire les calories produites par l'amortisseur (8, 14, 36, 55) qu'à partir d'un seuil de température variable suivant le type de caloduc.

Si ce seuil est convenablement choisi, il perme à basse température un réchauffement rapide de l'huile par effet de laminage, le caloduc étant bloqué. Au-delà du seuil de température correspondant au caloduc, celui-ci se met à fonctionner avec un rendement croissant pour transférer les calories produites pendant le laminage.

Il en résulte alors un réchauffement rapide de l'huile jusqu'à sa température optimum de fonctionnement.

Inversement, s'il y a peu de production calorifique de l'amortisseur et que la température ambiante est inférieure au seuil de déclenchement du caloduc, celui-ci est bloqué et ralentit le refroidissement de l'huile. La mise en oeuvre d'un caloduc à eau, dont le seuil de déclenchement est à 50°C et qui reste efficace jusqu'à +120°C environ, permet de profiter au maximum de l'effet de seuil dans les applications visées par l'invention.

**Revendications**

1. Elément de suspension hydropneumatique de véhicule, notamment oléopneumatique destiné à équiper des véhicules lourds, comprenant un piston (2, 16, 29, 34) mobile dans un cylindre, un accumulateur à gaz solidaire du cylindre (3, 15, 28, 56) et contenant du gaz ainsi qu'un liquide séparé du gaz par une membrane souple (5, 27), une cartouche amortisseur (8, 14, 36, 55) placée dans le liquide entre le piston (2, 19, ...) et la membrane (5, 27), ainsi que des moyens pour refroidir le liquide et corrélativement régler la garde au sol du châssis (52) du véhicule, caractérisé en ce que lesdits moyens pour refroidir le liquide comprennent un caloduc (9, 19, 50, 58) reliant la cartouche amortisseur (8, 14, 36, 55) qui forme une source chaude, à une source froide constituée par le châssis (52) du véhicule ou par une surface libre (42, 48) de l'élément (25, 12) lui-même, le caloduc contenant un gaz pouvant s'évaporer au contact de la cartouche, puis se déplacer jusqu'à la source froide où il se condense, et retourner ensuite jusqu'à la cartouche formant évaporateur en répétant le cycle, la source froide étant située au-dessus de la source chaude constituée par la cartouche amortisseur.

2. Elément de suspension selon la revendication 1, caractérisé en ce que le caloduc (50) est constitué d'un circuit (43, 38, 45) fermé s'étendant de l'intérieur de la cartouche amortisseur (36) jusqu'à une surface libre (42) d'un carter (33) fixé au cylindre (28) et traversé par un bras (32) support de roue, ce conduit étant agencé dans la rapoi du cylindre (28) et dans le carter (33) et des moyens sont prévus pour assurer l'étanchéité du conduit au passage de la paroi du cylindre (28) dans le carter (33) et de la cartouche (36) dans la paroi du cylindre (28).

3. Elément de suspension selon la revendication 1, caractérisé en ce que le caloduc (58) est constitué d'un conduit fermé s'étendant de l'intérieur de la cartouche amortisseur (55) jusqu'au châssis (52) du véhicule, et est agencé dans la paroi du cylindre (56), puis dans un carter (33) fixé au cylindre (56) et traversé par un bras (53) support de roue, pour se terminer dans le châssis (52) en y formant un condenseur pour le gaz, des moyens étant prévus pour assurer l'étanchéité du conduit aux jonctions entre, d'une part le carter (33) et la paroi du cylindre (56), et d'autre part entre le corps (33) et le châssis (52).

4. Elément de suspension selon l'une des revendications 1 à 3, caractérisé en ce que le caloduc (50, 64) débouche au-delà de son extrémité située dans la source froide (66, 43), dans une enceinte (67, 69) contenant un gaz incondensable dans le domaine de températures considéré pour l'élément de suspension (25) et sa cartouche amortisseur (36) ainsi qu'une source de chaleur telle qu'une résistance chauffante (70, 71) dont le réglage permet de déplacer un front (68) entre les deux gaz, et par conséquent la température du liquide de l'élément (25) et la garde au sol du véhicule.

5. Elément de suspension selon la revendication 4, caractérisé en ce que le volume de l'enceinte (67, 69) est supérieur à celui du caloduc (64, 50) et cette enceinte est fixée au carter (33) de l'élément (25) ou au châssis (52) du véhicule selon que le caloduc (50, 64) se termine dans le carter (33) ou dans le châssis (52).

6. Elément de suspension selon l'une des revendications 1 à 5, caractérisé en ce qu'un tube contenant le gaz condensable est logé dans le conduit constituant le caloduc (50, 58).

7. Elément de suspension selon l'une des revendications 1 à 6, caractérisé en ce que le caloduc (50) comprend une chambre terminale (39) agencée dans l'amortisseur (36) et formant une source chaude, qui communique avec une première section (43) du conduit ménagée radialement dans l'amortisseur (36) et qui débouche dans la paroi du cylindre (23).

8. Elément de suspension selon l'une des revendications 1 à 7, caractérisé en ce que le caloduc (9, 19, 50, 58) contient de l'eau comme fluide condensable.

9. Suspension hydropneumatique de véhicule, notamment suspension oléopneumatique de véhicule lourd, caractérisée en ce qu'elle comprend une série d'éléments (12, 25, 57) conformes à l'une quelconque des revendications 1 à 8.

**Patentansprüche**

1. Hydropneumatisches Aufhängungselement für Fahrzeuge, insbesondere ein ölpneumatisches Aufhängungselement zur Ausrüstung von Schwerfahrzeugen, mit einem in einem Zylinder beweglichen Kolben (2, 16, 29, 34), einem mit dem Zylinder (3, 15, 28, 56) verbundenen Gasspeicher mit Gas, einer durch eine elastische Membran (5, 27) von dem Gas getrennten Flüssigkeit, einer zwischen dem Kolben (2, 19, ...) und der Membran (5, 27) in der Flüssigkeit angeordneten Dämpfergehäuse (8, 14, 36, 55), sowie Mittel zum Kühlen der Flüssigkeit und zur Regelung der Bodenfreiheit des Fahrzeugchassis, dadurch gekennzeichnet, dass die Mittel zum Kühlen der Flüssigkeit einen die eine Wärmequelle in Form des Dämpfergehäuses (8, 14, 36, 55) mit einer Kältequelle in Form des Fahrzeugchassis (52) oder einer freien Fläche (42, 48) des Elementes (25, 12) selbst verbindenden Wärmeleitungskanal (9, 19, 50, 58) aufweist, wobei der Wärmeleitungskanal ein Gas enthält, welches im Kreislauf bei Kontant mit dem Gehäuse verdunstet, dann zu der Kältequelle strömt, wo es kondensiert, und das Kondensat wieder zurückströmt zu dem den Verdampfer bildenden Gehäuse, wobei die Kältequelle über dem die Wärmequelle bildenden Dämpfergehäuse angeordnet ist.

2. Aufhängungselement nach Anspruch 1, dadurch gekennzeichnet, dass der Wärmeleitungskanal (50) aus einer sich von dem Inneren des Dämpfergehäuses (36) bis zu einer freien Fläche (42) eines an dem Zylinder (28) befestigten und von einem Radtragarm durchzogenen Gehäuse (33) erstreckenden abgeschlossenen Kanal (43, 38, 45) besteht, wobei dieser Kanal in der Wand des Zylinders (28) und des Gehäuses (33) angeordnet ist und Mittel zur Sicherstellung der Dichtheit des Kanals beim Übergang von der Wand des Zylinders (28) in das Gehäuse (33) und von dem Dämpfergehäuse (36) in die Wand des Zylinders (28) vorgesehen sind.

3. Aufhängungselement nach Anspruch 1, dadurch gekennzeichnet, dass der Wärmeleitungskanal (58) ein sich von dem Inneren des Dämpfergehäuses (55) bis zu dem Fahrzeugchassis (52) erstreckender abgeschlossener Kanal ist, welcher in der Wand des Zylinders (56) und weiterhin in der an dem Zylinder (56) befestigten und von einem Radtragarm (53) durchzogenen Gehäuse (33) angeordnet ist und im Chassis (52) endet, wo er einen Kondensator für das Gas bildet, wobei die Mittel zur Sicherstellung der Dichtheit des Kanals an den Verbindungsstellen einerseits zwischen dem Gehäuse (33) und der Wand des Zylinders (56) und andererseits zwischen dem Gehäuse (33) und dem Chassis (52) vorgesehen sind.

4. Aufhängungselement nach einem der Ansprüche 1 bis 3, dadurch gekennzeichnet, dass der Wärmeleitungskanal (50, 64) an seinem von der Kältequelle (66, 43) abgewandten Ende in einen abgeschlossenen Raum (67, 69) mündet, mit einem nicht kondensierbaren Gas in dem für das Aufhängungselement (25) und sein Dämpfergehäuse (36) vorgesehenen Temperaturbereich, sowie einer Wärmequelle, wie zum Beispiel einem Heizwiderstand (70, 71), deren Regelung die Verlagerung einer Front (68) zwischen den beiden Gasen ermöglicht und infolgedessen der Temperatur der Flüssigkeit des Elementes (25) und der Bodenfreiheit des Fahrzeuges.

5. Aufhängungselement nach Anspruch 4, dadurch gekennzeichnet, dass das Volumen des abgeschlossenen Raumes (67, 69) grösser ist als das des Wärmeleitungskanals (64, 50), wobei dieser Raum an dem Gehäuse (33) des Elementes (25) oder an dem Chassis (52) des Fahrzeuges befestigt ist, je nachdem ob der Wärmeleitungskanal (50, 64) in dem Gehäuse (33) oder im Chassis (52) endet.

6. Aufhängungselement nach einem der Ansprüche 1 bis 5, dadurch gekennzeichnet, dass ein mit einem kondensierbaren Gas gefülltes Rohr in dem Wärmeleitungskanal (50, 58) gelagert ist.

7. Aufhängungselement nach einem der Ansprüche 1 bis 6, dadurch gekennzeichnet, dass der Wärmeleitungskanal (50) eine in dem Stossdämpfer (36) angeordnete und eine Wärmequelle bildende abschliessende Endkammer (39) aufweist, welche mit einem einem in dem Stosstämpfer radiale Aussparung bildenden ersten Abschnitt (43) des Kanals verbunden ist und welche in die Wand des Zylinders (23) mündet.

8. Aufhängungselement nach einem der Ansprüche 1 bis 7, dadurch gekennzeichnet, dass der Wärmeleitungskanal (9, 19, 50, 58) Wasser als kondensierbare Flüssigkeit enthält.

9. Hydropneumatische Aufhängung bei Fahrzeugen, insbesondere ölpneumatische Fahrzeugaufhängungen bei Schwerfahrzeugen, dadurch gekennzeichnet, dass diese eine Anzahl von Elementen (12, 25, 57) nach einem der Ansprüche 1 bis 8 aufweist.

**Claims**

1. A hydropneumatic, in particular an oleopneumatic, suspension element for equipping heavy vehicles, comprising a piston (2, 16, 29, 34) which is movable in a cylinder, a gas accumulator connected to the cylinder (3, 15, 28, 56) and containing gas and a liquid separated from the gas by a flexible diaphragm (5, 27), a shock absorber cartridge (8, 14, 36, 55) placed in the liquid between the piston (2, 19, ...) and the diaphragm (5, 27), and means for cooling the liquid and correlatively regulating the ground clearance of the chassis (52) of the vehicle, characterized in that said means for cooling the liquid comprise a heat pipe (9, 19, 58) connecting the shock absorber cartridge (8, 14, 36, 55) which forms a hot source, to a cold source constituted by the chassis (52) of the vehicle or by a free surface (42, 48) of the element (25, 12) itself, the heat pipe containing a gas capable of evaporating upon contact with the cartridge then moving to the cold source where it is condensed, and then returning to the cartridge forming an evaporator by repeating the cylce, the cold source being located above the hot source constituted by the shock absorber cartridge.

2. A suspension element according to claim 1, characterized in that the heat pipe (50) is constituted by a closed conduit (43, 38, 45) extending from the interior of the shock absorber cartridge (36) to a free surface (42) of a housing (33) fixed to the cylinder (28) and having a wheel-supporting arm (32) extending therethrough, this conduit being arranged in the wall of the cylinder (28) and in the housing (33), and means are provided for ensuring the sealing of the conduit in the passage from the wall of the cylinder (28) into the housing (33) and from the cartridge (36) into the wall of the cylinder (28).

3. A suspension element according to claim 1, characterized in that the heat pipe (58) is constituted by a closed conduit extending from the interior of the shock absorber cartridge (55) to a chassis of the vehicle, and is arranged in the wall of the cylinder (56), then in a housing (33) fixed to the cylinder (56) and having a wheel-supporting arm (53) extending therethrough, and terminating in the chassis (52) by forming therein a condenser for the gas, means being provided for ensuring the sealing of the conduit at the junctions between, on one hand the housing (33) and the wall of the cylinder (56), and on the other hand between the body (33) and the chassis (52).

4. A suspension element according to one of the claims 1 to 3, characterized in that the heat pipe (50, 65) opens beyond its end located in the cold source (66, 43) into a chamber (67, 69) containing an uncondensable gas in the considered temperature range of the suspension element (25) and its shock absorber cartridge (36), and a source of heat such as a heating resistor (70, 71) the regulation of which permits displacing a front (68) between the two gases, and consequently de temperature of the liquid of the element (25) and the ground clearance of the vehicle.

5. A suspension element according to claim 4, characterized in that the volume of the chamber (67, 69) is larger than that of the heat pipe (64, 50) and this chamber is fixed to the housing (33) of the element (25) or to the chassis (52) of the vehicle depending on whether the heat pipe (50, 64) terminates in the housing (33) or in the chassis (52).

6. A suspension element according to one of the claims 1 to 5, characterized in that a tube containing the condensable gas is disposed in the conduit constituting the heat pipe (50, 58).

7. A suspension element according to one of the claims 1 to 6, characterized in that the heat pipe (50) comprises an end chamber (39) arranged in the shock absorber (36) and forming a hot source, which communicates with a first section (43) of the conduit arranged radially in the shock absorber (36) and which opens into the wall of the cylinder (23).

8. A suspension element according to one of the claims 1 to 7, characterized in that the heat pipe (9, 19, 50, 58) contains water as condensable fluid.

9. A hydropneumatic vehicle suspension, in particular an oleopneumatic heavy vehicle suspension, characterized in that it comprises a series of elements (12, 25, 57) according to any one of the claims 1 to 8.

**FIG.1**

FIG.2

FIG.6

FIG.3

FIG.4

FIG.5

FIG. 7